Europäisches Patentamt

European Patent Office

Office européen des brevets

(19)

(11) Numéro de publication: **0 043 777**
**B1**

(12) **FASCICULE DE BREVET EUROPEEN**

(45) Date de publication du fascicule du brevet: **22.05.85**

(21) Numéro de dépôt: **81401093.0**

(22) Date de dépôt: **07.07.81**

(51) Int. Cl.⁴: **F 17 C 9/00, F 17 C 13/00 //**
**B64G1/42, F02K9/60**

(54) Dispositif de stockage de liquide utilisant la tension superficielle de celui-ci.

(30) Priorité: **08.07.80 FR 8015189**

(43) Date de publication de la demande:
**13.01.82 Bulletin 82/02**

(45) Mention de la délivrance du brevet:
**22.05.85 Bulletin 85/21**

(84) Etats contractants désignés:
**BE DE GB IT NL**

(56) Documents cités:
**FR-A-2 254 494**
**FR-A-2 283 390**
**FR-A-2 372 642**
**US-A-3 486 302**

**JOURNAL OF SPACECRAFT AND ROCKETS**
**vol. 12, mai 1975 New York, US S.C. DEBROCK**
**et al.: "Capillary propellant management for**
**integrated primary and secondary propulsion**
**systems", pages 261-270**

(73) Titulaire: **SOCIETE EUROPEENNE DE**
**PROPULSION (S.E.P.) Société Anonyme dite:**
**3, avenue du Général de Gaulle**
**F-92800 Puteaux (FR)**

(72) Inventeur: **Robert, Michel**
**97, rue de la Ravine**
**F-27200 Vernon (FR)**

(74) Mandataire: **Joly, Jean-Jacques et al**
**CABINET BEAU DE LOMENIE 55, rue**
**d'Amsterdam**
**F-75008 Paris (FR)**

Courier Press, Leamington Spa, England.

## Description

La présente invention concerne un dispositif de stockage de liquide utilisant la tension superficielle de celui-ci, du type comportant: une enceinte destinée à contenir un liquide et un gaz de pressurisation; un dispositif de sortie de liquide comprenant une structure constituée par un ensemble d'éléments rigides qui entourent un passage central en formant une barrière de gaz autour de celui-ci, ledit passage central communiquant avec un dispositif d'utilisation à travers un orifice de sortie de liquide hors d'lenceinte; et un dispositif d'alimentation aboutissant à une entrée du dispositif de sortie pour alimenter celui-ci en liquide.

Le dispositif objet de l'invention est plus particulièrement destiné au stockage d'ergols à bord de satellites ou de plates-formes stabilisées trois-axes. Pour de tels satellites, il n'existe pas de direction privilégiée de l'accélération assurant la présence de l'ergol dans une zone déterminée de l'enceinte de stockage. L'accélération ambiante reste faible et peut avoir une direction variable par rapport à l'enceinte, cette accélération étant liée soit aux couples perturbateurs, soit à l'activation du système de contrôle et d'orbite.

Il a été proposé de réaliser des dispositifs de stockage sous forme d'enceintes sphériques dans lesquelles un système collecteur amène le liquide vers la sortie quelle que soit la position du liquide dans l'enceinte. Le système collecteur est formé par exemple de tubes dont la paroi est constituée au moins en partie par une toile métallique et qui sont situés dans les zones où le liquide est susceptible de se trouver, notamment le long de la paroi interne de l'enceinte. Lorsque la toile métallique est mouillée, elle empêche le gaz de pénétrer à l'intérieur des tubes collecteurs tant que la différence des pressions s'appliquant de part et d'autre de la toile reste inférieure à la valeur limite (point de bulle) pour laquelle sont rompus les ménisques d'interface gaz-liquide situés entre les mailles de la toile. Les tubes collecteurs aboutissent à la sortie munie d'une ou plusieurs barrières de gaz formées par des toiles métalliques empêchant le gaz éventuellement présent dans les tubes d'être expulsé avec le liquide et de perturber le fonctionnement du dispositif utilisant ce liquide.

Les toiles métalliques posent des problèmes de nettoyage, de garantie du point de bulle, de fixation et de résistance à la corrosion provoquée par le liquide stocké. En outre, dans le cas par exemple du stockage d'ergol pour un satellite devant assurer une mission de longue durée, il est souhaitable de disposer dans un temps relativement bref, et à chaque fois que cela est nécessaire, d'une certaine quantité d'ergol pour réaliser par exemple une opération de contrôle d'attitude ou de contrôle d'orbite.

Pour éviter les inconvénients des toiles métalliques, il est proposé dans le document FR—A—2 372 642 un dispositif du type défini en tête de cette description, dans lequel les toiles sont remplacées par un ensemble de disques rigides empilés sur un mandrin et muni de cannelures radiales. Toutefois, cette structure assure uniquement une fonction de barrière de gaz et n'apporte rien de plus que les toiles métalliques en ce qui concerne la mise à disposition d'une certaine quantité de liquide pour le dispositif d'utilisation. Aussi, la présente invention a-t-elle pour but de fournir un dispositif de stockage grâce auquel le dispositf d'utilisation, au cours de chacune de ses phases de fonctionnement, peut recevoir rapidement et efficacement le liquide qui lui est nécessaire en provenance du dispositif de stockage.

Ce but est atteint par un dispositif de stockage selon la revendication 1.

Grâce au dispositif conforme à l'invention, une certaine quantité de liquide est piégée par capillarité dans la structure qui n'occupe qu'une petite fraction du volume libre total de l'enceinte. Cette quantité de liquide doit permettre d'assurer le fonctionnement pendant une durée déterminée d'un ou plusieurs dispositifs, par exemple des moteurs, utilisant le liquide. La réalimentation du réservoir-tampon se fait par capillarité pendant les phases d'apesanteur.

La stabilité du liquide dans le réservoir-tampon autour du passage central résulte du fait que le largeur des espaces entre éléments voisins de la structure est une fonction croissante de la distance au passage central. Les termes "fonction croissante" signifient ici que cette larguer ne subit aucune diminution en quelque zone que ce soit de la structure depuis la limite intérieure de celle-ci définissant le passage central jusqu'à la limite extérieure de cette structure, en direction radiale. La largeur peut donc rester constante sur une distance radiale plus ou moins grande de la structure. Il est toutefois préférable que la largeur soit croissante au sens strict au moins dans une partie de la structure située tout autour du passage central et bordant celui-ci afin de favoriser, le cas échéant, un "recentrage" du liquide autour du passage central, comme cela sera expliqué plus loin en détail.

A la limite avec le passage central, les éléments de la structure forment une barrière de gaz dont le point de bulle est, toutes choses égales par ailleurs, déterminé par la largeur des expaces entre éléments à ce niveau, c'est-à-dire la valeur minimale de largeur des espaces entre éléments. La valeur maximale de cette largeur détermine quant à elle, toutes choses égales par ailleurs, la valeur maximale de l'accélération qui peut être apliquée au dispositif de stockage sans que le liquide contenu dans le réservoir tampon puisse être expulsé à l'extérieur de celui-ci, dans l'enceinte.

L'invention sera mieux comprise à la lecture de la description faite ci-après, à titre indicatif mais non limitatif, en référence aux dessins annexés qui illustrent:

— figure 1: une vue schématique en coupe méridienne d'un dispositif de stockage conforme à l'invention;

— figure 2: une vue en coupe suivant la ligne II—II de la figure 1;

— figure 3: une vue de détail à échelle agrandie et à demi en coupe méridienne du réservoir tampon du dispositif de stockage illustré par les figures 1 et 2;

— figure 4: une demi-vue en coupe transversale suivant la ligne IV—IV de la figure 3;

— figures 5 et 6: deux vues en coupe transversale de deux autres modes de réalisation du réservoir tampon d'un dispositif de stockage conforme à l'invention; et

— figure 7: une vue en demi-coupe méridienne du réservoir-tampon illustré par la figure 6.

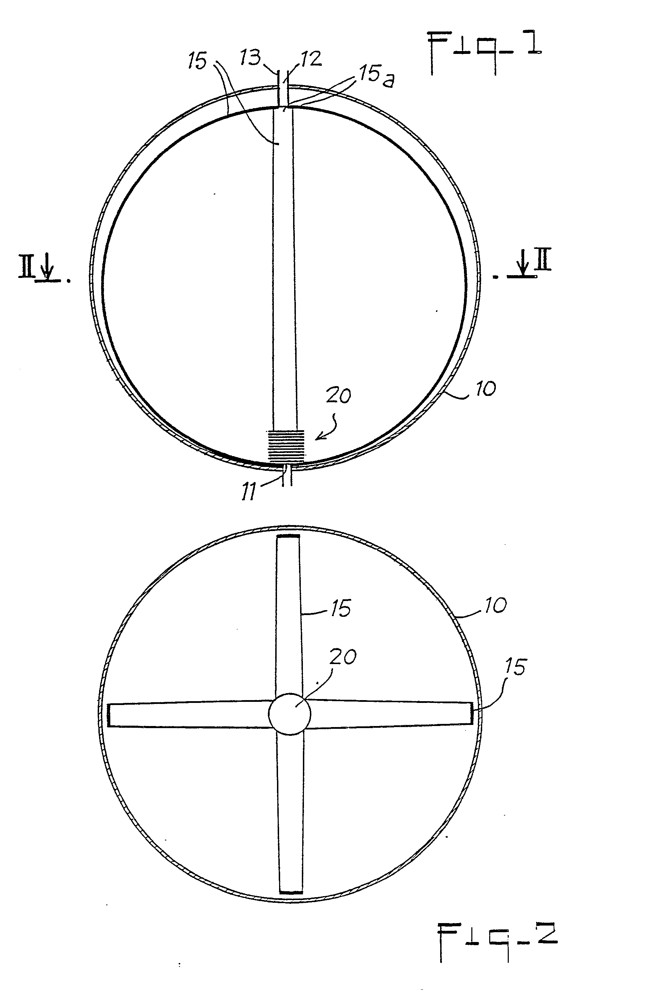

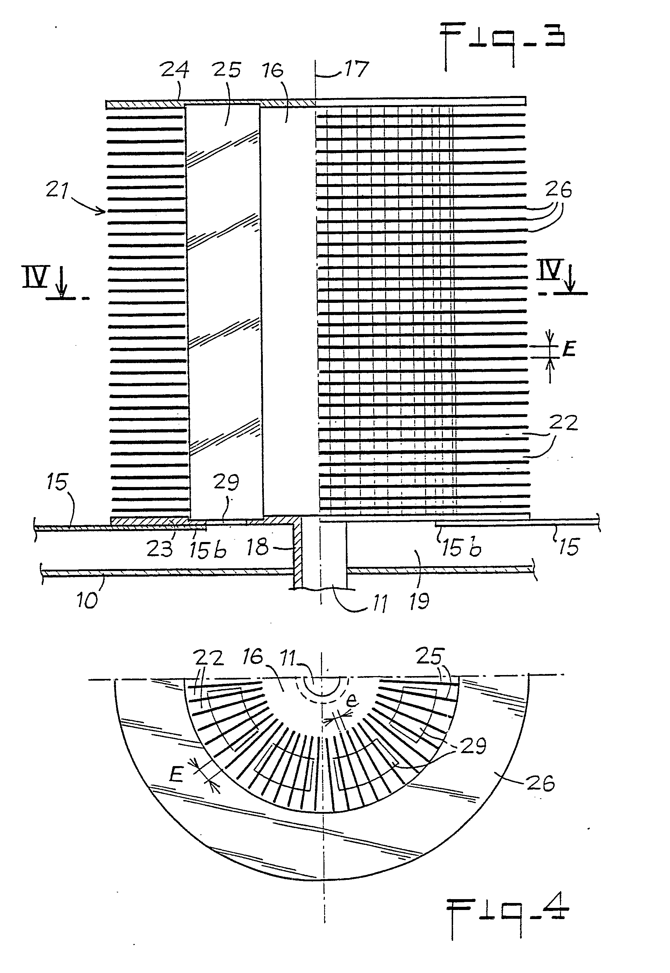

Les figures 1 et 2 illustrent un dispositif de stockage d'ergol pour satellite comportant une enceinte sphérique 10, un orifice de sortie de liquide 11 formé dans la paroi de l'enceinte, un dispositif de sortie de liquide 20 communiquant avec l'orifice 11 et un dispositif d'alimentation formé de lames 15 aboutissant au dispositif de sortie 20. Un orifice 12 est formé dans la paroi de l'enceinte dans une zone située sensiblement à l'opposé de celle où l'orifice 11 est prévu. Une canalisation 13 est branchée sur l'orifice 12 pour faire communiquer un réservoir (not représenté) contenant un gaz de pressurisation avec l'intérieur de l'enceinte 10.

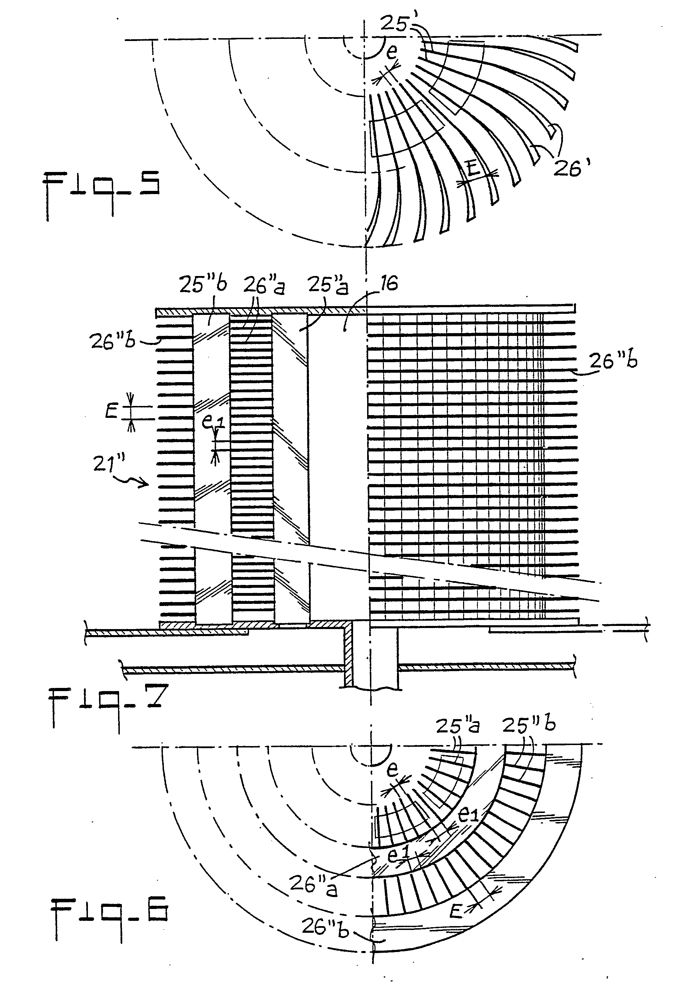

Le dispositif de sortie 20 est illustré plus en détail par les figures 3 et 4. Il comporte une structure feuilletée 21 entourant un passage central 16. La structure feuilletée 21 est formée d'éléments plans, par exemple des tôles métalliques délimitant entre elles des espaces ou feuillets 22 qui sont ouverts sur les faces intérieure et extérieure de la structure 21. La largeur d des feuillets 22 passe d'une valeur e à la surface intérieure de la structure 21 à une valeur E à la surface extérieure de la structure 21, sans décroître entre ces limites. La valeur E est supérieure à la valeur e.

Le passage 16 est un canal de forme cylindrique à section circulaire dont l'axe 17 est perpendiculaire à la paroi de l'enceinte et aligné avec celui de l'orifice de sortie 11. Un tube 18 relie un extrémité du passage 16 à l'orifice 11 à travers une plaque de base 23 supportant la structure feuilletée. L'autre extrémité du passage 16 est obturée par une plaque de fermeture 24. La paroi latérale du passage 16 est la surface intérieure de la structure feuilletée définie par les bords intérieurs des éléments de la structure entourant immédiatement le passage 16.

La plaque 23 ménage un espace 19 avec la partie de paroi interne de l'enceinte 10 entourant l'orifice de sortie 11.

Pendant la période d'utilisation du dispositif de stockage, l'enceinte 10 contient du liquide et du gaz de pressurisation, et la structure feuilletée fait fonction de réservoir-tampon entre l'intérieur de l'enceinte 10 et la sortie 11.

Le volume de liquide piégé dans les feuillets 22 est supérieur à la quantité maximale utilisable pour une opération requérant l'utilisation de ce liquide. Le volume occupé par la structure feuilletée 20 ne représente toutefois qu'une petite fraction du volume total libre de l'enceinte (voir figure 1).

Au cours de chaque phase d'utilisation de liquide, celui-ci est puisé par le passage 16 pour être amené à un dispositif d'utilisation, non représenté, par exemple un ou plusieurs moteurs. Lorsque le passage pour le liquide est permis en aval de l'orifice 11, l'écoulement du liquide hors de l'enceinte 10 se produit sous l'effet de la pression du gaz de pressurisation. Entre deux phases d'utilisation, le réservoir tampon est réalimenté comme cela sera expliqué plus loin.

Le fonctionnement correct du réservoir tampon est assuré tant que les forces capillaires existant au niveau des ménisques d'interfaces liquide-gaz dans les feuillets 22 pourront s'opposer à la différence entre les pressions s'exerçant de part et d'autre de ce ménisque afin d'éviter:

— l'expulsion de liquide depuis le réservoir tampon dans l'enceinte 10 à travers les extrémités des feuillets situées du côté extérieur de la structure 21, et

— la pénétration de bulles de gaz de pressurisation dans le passage central lorsqu'un ménisque est parvenu à la limite intérieure de la structure 21 et tant qu'une quantité substantielle de liquide subsiste dans le réservoir.

La différence des pressions qui s'exercent sur un ménisque d'interface liquide-gaz dans une feuillet 22 comporte une première composante PH représentant la différence de pression hydrostatique liée à l'existence d'une accélération ambiante et une seconde composante PV représentant les pertes de charges liées à l'écoulement du liquide.

A la périphérie de la structure feuilletée, la composante PH est prépondérante car les pertes de charge liées à l'écoulement du liquid sont négligeables du fait de la faible longueur de cheminement du liquide. La différence de pression maximale que doit supporter un ménisque dans cette zone est donc sensiblement proportionnelle à l'accélération ambiante maximale sous laquelle le réservoir-tampon est amené à fonctionner et à la plus grande dimension de la structure 21. La capacité volumique désirée par le réservoir tampon et l'accélération maximale étant fixées, les dimensions extérieures de la structure feuilletée et la valeur maximale E de la largeur de feuillet peuvent être déterminées. Pour des raisons de facilité de construction, on peut choisir pour la structure feuilletée 21 une forme générale cylindrique à section circulaire d'axe 17 et à section méridienne de forme rectangulaire.

Les pertes de charges dues à l'écoulement du liquide dans le passage central 16 doivent de préférence être aussi faibles que possible pour minimiser la composante PV. Pour ce faire, on choisit un passage central ayant une section de passage suffisamment grande, par exemple un diamètre compris entre 1 et 5 cm. Au-delà de 5 cm, il n'y a pas de diminution significative des pertes de charge, mais par contre, il devient nécessair d'augmenter le nombre d'éléments de la structure feuilletée pour conserver une largeur de feuillet minimale e suffisamment petite avec les inconvénients qui en résultent pour le poids et l'encombrement de la structure feuilletée.

Cette valeur minimale e est un des facteurs qui déterminent le point de bulle de la barrière de gaz que forment les éléments de la structure 21 autour du passage central 16. Plus e est petit, plus le point de bulle est élevé. On augmente le point de bulle en augmentant le nombre d'éléments de la structure feuilletée qui bordent le passage central; mais alors les pertes par viscosité sont plus importantes, d'où un accroissement de la composante PV qui peut atteindre un niveau inacceptable au regard du point de bulle à l'extrémité intérieure de feuillets.

A titre indicatif, on peut choisir pour la largeur de feuillet minimale e une valeur comprise entre 0,3 et 1 mm environ.

Comme déjà indiqué, la largeur de feuillet d est préférence croissante au sens strict dans la partie la plus proche du passage central 16 pour permettre un "recentrage" éventuel du liquide après une phase d'extraction de liquide.

En effet, à la fin d'une phase d'extraction, et notamment s'il reste peu de liquide dans l'enceinte, des ménisques d'interface liquide-gaz peuvent se trouver dans les feuillets 22 à des distances différentes du passage central 16 et même à la limite de ce dernier. Si les positions de ces ménisques restaient inchangées jusqu'à la phase d'extraction de liquide suivante, la pénétration de bulles de gaz de pressurisation dans le passage 16 pourrait se produire à partir des feuillets les moins garnis de liquide et alors qu'il peut rester une quantité substantielle de liquide dans le réservoir tampon. Ceci est empêché du fait que le liquide se recentre en apesanteur autour du passage 16 car les ménisques tendent à s'établir dans des zones des feuillets 22 de largeurs sensiblement égales. Le recentrage du liquide dans le réservoir-tampon permet ainsi une utilisation optimale du liquide stocké avant franchissement de la barrière de gaz par le gaz de pressurisation.

Dans le cas du mode particulier de réalisation illustré par les figures 3 et 4, la structure 21 comporte une première partie située du côté intérieur et dans laquelle la largeur de feuillet croît de sa valeur minimale e au niveau du passage central 16 à sa valeur maximale E, et une seconde partie dans laquelle la largeur de feuillet reste égale à E. La première partie est constituée par des ailettes radiales planes 25 qui sont situées dans des plans médians, sont réparties angulairement de façon régulière autour de l'axe 17 et ont toutes mêmes dimensions. La seconde partie de la structure 21 est formée par des anneaux plans ou disques 26 identiques régulièrement espacés les uns des autres, qui entourent les ailettes 25 et sont perpendiculaires à l'axe 17. Les diamètres intérieurs des disques 26 sont égaux au diamètre extérieur du cylindre dans lequel les ailettes 25 s'inscrivent.

La plaque de base circulaire 23 supporte la structure feuilletée, et la plaque de fermeture 24 est une plaque circulaire pleine couvrant toute la structure 21. Les plaques 23 et 24 ont même diamètre extérieur que les disques 26 et sont espacées de ceux qui leur sont voisins d'une distance égale à E. L'ensemble de la structure ainsi constituée a la forme d'un cylindre de section transversale circulaire et de section méridienne carrée.

Les dimensions et le nombre des ailettes 25 et des disques 26 sont déterminés en fonction notamment de la capacité volumique requise pour le réservoir tampon, et des différences de pression maximales que doivent supporter sans rupture les ménisques d'interface gaz-liquide dans les feuillets 22, comme indiqué plus haut. Bien entendu, d'autres considérations peuvent entrer en jeu, par exemple la masse de la structure, sa fabrication et sa tenue mécnique souhaitée, cette dernière influençant le choix de l'épaisseur des éléments constitutifs de la structure et réagissant donc sur l'encombrement de ces éléments dans le réservoir tampon.

A titre purement illustratif, on donne ci-après un exemple détaillé de réalisation d'un réservoir tampon d'un dispositif de stockage conforme à l'invention.

Por des raisons de simplicité de fabrication, la forme choisie est celle illustrée par les figures 3 et 4.

Le liquide est du péroxyde d'azote. Le volume minimum de liquide devant être stocké dans le réservoir tampon est fixé à 1.500 cm$^3$ et l'accélération maximale devant être subie en cours de fonctionnement est de 0,052 m/s$^2$.

Compte-tenu du volume à stocker et de l'encombrement estimé des éléments de la structure, on choisit pour celle-ci un diamètre extérieur et une longueur axiale totale égaux à 15 cm.

La dépression hydrostatique maximale (le long d'une diagonale du cylindre) est de 16 Pa, ce qui impose une valeur maximale de largeur de feuillet E d'environ 2,7 mm.

On choisit par ailleurs un diamètre du passage central 16 égal à 30 mm pour être assuré que les pertes de charges par écoulement dans ce passage seront négligeables.

Les ailettes 25 et disques 26 sont réalisés en tôle métallique d'épaisseur égale à 0,5 mm. Compte-tenu du diamètre retenu pour le passage 16 et du fait que la largeur du feuillet minimale doit être inférieure re à 2,7 mm, le nombre d'ailettes doit être au moins égal à 30.

La valeur minimale e de la largeur de feuillet est finalement choisie égale à 0,5 mm, ce qui ne complique pas outre mesure les opérations de fabrication et n'entraîne pas une valeur trop élevée des pertes de charge par écoulement dans des feuillets entre ailettes. Le nombre d'ailettes retenu est donc 94.

La valeur maximale E de la largeur de feuillet est choisie égale à 2 mm pour laisser une marge suffisante par rapport à la valeur limite calculée.

Cette largeur de feuillet est atteinte entre ailettes 25 à une distance de l'axe 17 égale à 77 mm environ.

Les disques 26 ont donc des diamètres intérieur et extérieur égaux respectivement à 74 et 150 mm et leur nombre est ègal à 60.

Le réservoir tampon ainsi réalisé présente les caractéristiques suivantes:

— volume libre pour ce liquide: 1.987 $cm^3$;

— accélération maximale supportable: 0,072 m/$s^2$;

— perte de charge maximale due à l'écoulement entre disques pour le débit maximum requis (70 $cm^3$/s): 0,002 Pa;

— perte de charge maximale due à l'écoulement entre ailettes: 1,6 Pa.

Dans le cas du réservoir tampon illustré par les figures 3 et 4, les disques 26 réalisent une extension de volume du réservoir tampon par rapport au volume libre entre ailettes. Cette extension est réalisée sans augmentation de la largeur de feuillet. Par comparaison, on notera que si seules de ailettes radiales étaient utilisées, une augmentation du volume du réservoir tampon nécessiterait une augmentation du nombre d'ailettes, pour conserver à la largeur de feuillet maximale une valeur inférieure à la limite imposée, avec les problèmes de masse, d'encombrement et de fabrication au niveau de la limite intérieure de la structure qui en reśsulteraient.

Le mode de réalisation de réservoir tampon illustré par les figures 3 et 4 est donc un mode de réalisation particulièrement avantageux. Toutefois, d'autres modes de réalisation pourront être adoptés.

Dans l'exemple illustré par la figure 5, le réservoir tampon est formé par une structure constituée par un ensemble d'ailettes radiales 25' analogues aux ailettes 25 et prolongées par des aubes fixes 26' de forme sensiblement en spirale, disposées parallèlement à l'axe du passage central et séparées les unes des autres par des intervalles de largeur constante égale à la largeur E séparant les extrémités extérieures des ailettes 25'.

Suivant encore une autre variante, le réservoir tampon peut être formé, de l'intérieur vers l'extérieur par une succession d'ensembles alternativement d'ailettes méridiennes et de disques transversaux. Ainsi, dans l'exemple illustré par les figures 6 et 7, la structure feuilletée 21″ comporte, successivement, des ailettes méridiennes 25″a le long desquelles la largeur de feuillet croît de la valeur e à une valeur $e_1$, des disques transversaux 26″a régulièrement espacés les uns des autres d'une largeur de feuillet égale à $e_1$, des ailettes méridiennes 25″b le long desquelles la largeur de feuillet croît de la valeur $e_1$ à la valeur E et des disques transversaux 26″b régulièrement espacés les uns des autres d'une largeur de feuillet égale à E.

En revenant maintenant aux figures 1 à 4, on décrira maintenant le dispositif permettant de réalimenter en liquide le réservoir tampon pendant la période d'apesanteur suivant chaque phase d'extraction de liquide du réservoir tampon dans le passage central 16 à travers l'orifice 11.

La réalimentation du réservoir tampon se fait à partir de l'espace 19 à travers un ou plusieurs orifices 29 formées dans la plaque de base 23. Les orifices sont prévus sous les feuillets entre les ailettes méridiennes 25, à une certain distance de la limite avec le passage central 16.

Le liquide nécessaire à la réalimentation du réservoir tampon est amené dans l'espace 19 par les lames collectrices 15. Ces dernières, par exemple au nombre de quatre, sont réparties angulairement de façon règulière et sont disposées le long de la paroi interne de l'enceinte 10 (figure 1). A une extrémité 15a, les lames 15 sont reliées entre elles. A leur autre extrémité 15b, les lames 15 sont fixées à plaque de base 23 (figure 3). Comme on peut le voir sur les figures 1 et 2, l'intervalle entre les lames 15 et la paroi interne de l'enceinte 10 décroît depuis l'extrémité 15a jusqu'à l'extrémité 15b tandis que la largeur des lames 15 croît.

Les lames 15 collectent le liquide qui se trouve préférentiellement contre la paroi interne de l'enceinte. En apesanteur, le liquide a tendance à mouiller la plus grande surface possible et va donc s'établir entre les lames 15 et la paroi de l'enceinte 10 jusqu'à arriver au niveau du réservoir tampon et remplir ce dernier. La disposition des lames de telle sorte que leur distance à la paroi de l'enceinte diminue en direction du réservoir tampon, accroît l'effet de "pompage" du liquide vers ce dernier. On notera que cette distance doit rester supérieure à la valeur minimale e de la largeur entre feuillets, de préférence, à la valeur maximale E de cette largeur, de façon que le liquide se stabilise de façon préférentielle dans le volume occupé par la structure feuilletée.

L'augmentation de la argeur des lames 15 en direction du réservoir tampon procure un effet de "pompage" additionnel dû à l'augmentation de la surface mouillée par le liquide.

Dans l'exemple illustré par les figures 1 et 2, les lames 15 sont au nombre de quatre et réunies à leur extrémité 15a opposée à celle aboutissant au réservoir tampon. Bien entendu, le nombre de lames pourra être différent. En outre, il n'est par nécessaire qu'elles soient réunies à leurs extrémités 15a.

L'utilisation d'un système collecteur tel que celui formé par les lames 15 présente les avantages d'être de construction simple et d'éviter l'utilisation de toute toile métallique susceptible d'être endommagée par le liquide contenu dans l'enceinte.

Toutefois, d'autres systèmes collecteurs peuvent être utilisés, par exemple des nervures faisant saillie perpendiculairement à la paroi interne de l'enceinte et aboutissant au réservoir tampon.

Il est également possible d'utiliser un système collecteur à canaux disposés comme les lames 15 le long de la paroi interne de l'enceinte et ayant au moins leur paroi tournée vers celle de l'enceinte formée par une toile métallique, les canaux aboutissant à une extrémité dans l'espace 19 et étant, à leurs autres extrémités, séparés du volume interne de l'enceinte par une paroi pleine ou une barrière de gaz. Un tel système collecteur à canaux est notamment décrit dans le brevet des Etats-Unis d'Amérique n° 3 176.882.

**Revendications**

1. Dispositif de stockage de liquide utilisant la tension superficielle de celui-ci, comportant: une enceinte (10) destinée à contenir un liquide et un gaz de pressurisation; un dispositif (20) de sortie de liquide comprenant une structure (21) constituée par un ensemble d'éléments rigides qui entourent un passage central (16) en formant une barrière de gaz autour de celui-ci, ledit passage central communiquant avec une dispositif d'utilisation à travers un orifice (11) de sortie de liquide hors de l'enceinte; et un dispositif d'alimentation (15) aboutissant à une entrée du dispositif de sortie pour alimenter celui-ci en liquide, caractérisé en ce que ladite structure (21) forme un réservoir-tampon dans lequel du liquide est retenu par effet de tension de surface dans des espaces (22) situés entre éléments rigides pour former une réserve qui est utilisable au cours d'une phase de fonctionnement du dispositif d'utilisation et qui est réalimentée par capillarité après chaque utilisation au moyen du dispositif d'alimentation, lesdits espaces (22) ayant une largeur qui croît en fonction de la distance au passage central depuis une valeur minimale (e) choisie de manière à former barrière de gaz à la périphérie du passage central (16) jusqu'à une valeur maximale (E) choisie de manière à empêcher le liquide contenu dans la structure d'être expulsé dans l'enceinte (10) tant que l'accélération ambiante ne dépasse pas un seuil donné.

2. Dispositif selon la revendication 1, caractérisé en ce qu'au moins dans une partie de la structure (20) bordant le passage central, la largeur desdits espaces (22) entre éléments rigides est croissante au sens strict en fonction de la distance au passage central de manière à favoriser l'effet capillaire dans cette partie de structure.

3. Dispositif selon l'une quelconque des revendications 1 et 2, caractérisé en ce que la structure comporte un ensemble d'ailettes planes (25, 25', 25"a) disposées radialement autour du passage central (16).

4. Dispositif selon la revendication 3, caractérisé en ce que la structure comporte au moins un ensemble supplémentaire d'éléments (26, 26', 26"a, 26"b) disposés autour de l'ensemble d'ailettes radiales.

5. Dispositif selon la revendication 4, caractérisé en ce que lesdits éléments supplémentaires (26, 26', 26"a, 26"b) ménagent entre eux des espaces de largeur constante.

6. Dispositif selon l'une quelconque des revendications 4 et 5, caractérisé en ce que ledits éléments supplémentaires sont des disques (26, 26"a, 26"b) entourant les ailettes radiales et perpendiculaires à celui-ci.

7. Dispositif selon l'une quelconque des revendications 1 à 6, caractérisé en ce que la structure (21) occupe un volume cylindrique dont l'axe est celui du passage central (16).

8. Dispositif selon la revendication 7, caractérisé en ce que la structure (20) a, en section méridienne, une forme rectangulaire.

9. Dispositif selon l'une quelconque des revendications 1 à 8, caractérisé en ce que le réservoir tampon (20) et le passage central (16) sont fermés au niveau de l'extrémité du passage central la plus éloignée de l'orifice de sortie (11).

10. Dispositif selon l'une quelconque des revendications 1 à 9, caractérisé en ce que la structure (20) est séparée de la zone de paroi de l'enceinte (10) où est formé l'orifice de sortie (16) par un espace (19) où le dispositif d'alimentation (15) aboutit.

11. Dispositif selon la revendication 10, caractérisé en ce que la structure (20) est portée par une plaque (23) faisant face à ladite zone de paroi et présentant des ouvertures (29) pour la réalimentation en liquide du réservoir tampon (20).

12. Dispositif selon l'une quelconque des revendications 1 à 11, caractérisé en ce que le dispositif d'alimentation est formé par un ensemble de lames (15) disposées sensiblement parallèlement à la paroi de l'enceinte (10) et aboutissant au réservoir tampon (20).

13. Dispositif selon la revendication 12, caractérisé en ce que la distance entre les lames (15) et la paroi interne de l'enceinte (10) est supérieure à la distance minimale entre éléments voisins de la structure (20).

14. Dispositif selon l'une quelconque des revendications 12 et 13, caractérisé en ce que la distance entre les lames (15) et la paroi interne de l'enceinte (10) est décroissante en direction du réservoir tampon (20).

15. Dispositif selon l'une quelconque des revendications 12 à 14, caractérisé en ce que la largeur des lames (15) est croissante en direction du réservoir tampon (20).

**Patentansprüche**

1. Vorrichtung zur Speicherung von Flüssigkeit und Verwendung von deren Oberflächenspannung, mit einem Behälter (10) zur Aufnahme einer Flüssigkeit und eines Druckerzeugungsgases, mit einer Auslaßeinrichtung (20) für Flüssigkeit, deren Aufbau (21) aus einer Anordnung von starren Elementen besteht, die einen zentralen Gaskanal (16) umgeben und um diesen eine Gasbarriere bilden, wobei der zentrale Kanal durch eine außerhalb des Behälters gelegene Flüssigkeitsauslaßöffnung (11) mit einer Gebrauchsvorrichtung in Verbindung steht, und mit einer Speisevorrichtung (15), die sich an einen Einlaß der Auslaßvorrichtung anfügt, um diese mit Flüssigkeit zu speisen, dadurch gekennzeichnet, daß der Aufbau (21) einen Pufferbehälter bildet, in dem die Flüssigkeit durch die Oberflächenspannung in den zwischen den starren Elementen befindlichen Zwischenräumen (22) zur Bildung eines Vorrats zurückgehalten wird, der im Verlauf einer Betriebsphase der Gebrauchvorrichtung verwendbar ist und der nach jedem Gebrauch mittels der Speisevorrichtung durch Kapillarität nachgespeist wird, wobei die Zwischenräume (22) eine Breite haben, die in Abhängigkeit vom Abstand zum zentralen Kanal zunimmt: von einem minimalen Wert (e) der so gewählt ist, daß et am Umfang des zentralen Kanals (16) eine Gasbarriere bildet, bis zu einem maximalen Wert (E), der so gewählt ist, daß die im Aufbau enthaltene Flüssigkeit daran gehindert wird, in den Behälter (10) ausgestossen zu werden, solange die Umgebungsbeschleunigung einen gegebenen Schwellwert nicht übersteigt.

2. Vorrichtung nach Anspruch 1, dadurch gekennzeichnet, daß wenigstens in einem an dem zentralen Kern angrenzenden Teil des Aufbaus (20) die Breite der Zwischenräume (22) zwischen starren Elementen streng in Abhängigkeit vom Abstand zum zentralen Kern so zunimmt, daß die Kapillarwirkung in diesem Teil des Aufbaus begünstigt wird.

3. Vorrichtung nach einem der Ansprüche 1 und 2, dadurch gekennzeichnet, daß der Aufbau eine Anordnung von ebenen Flügeln (25, 25', 25"a) aufweist, die radial um den zentralen Kanal (16) angeordnet sind.

4. Vorrichtung nach Anspruch 3, dadurch gekennzeichnet, daß der Aufbau wenigstens eines zusätzliche Anordnung von Elementen (26, 26', 26"a, 26"b) aufweist, die um die Anordnung von radialen Flügeln angeordnet sind.

5. Vorrichtung nach Anspruch 4, dadurch gekennzeichnet, daß die zusätzlichen Elemente (26, 26', 26"a, 26"b) untereinander Zwischenräume mit konstanter Dicke bilden.

6. Vorrichtung nach einem der Ansprüche 4 und 5, dadurch gekennzeichnet, daß die zusätzlichen Elemente Scheiben (26, 26"a, 26"b) sind, die die radialen Flügel umgeben und senkrecht zu diesen sind.

7. Vorrichtung nach einem der Ansprüche 1 bis 6, dadurch gekennzeichnet, daß der Aufbau ein zylindrisches Volumen einnimmt, dessen Achse diejenige des zentralen Kanals (16) ist.

8. Vorrichtung nach Anspruch 7, dadurch gekennzeichnet, daß der Aufbau (20) im Meridianschnitt eine rechteckige Form hat.

9. Vorrichtung nach einem der Ansprüche 1 bis 8, dadurch gekennzeichnet, daß der Pufferbehälter (20) und der zentrale Kanal (16) in Höhe des von der Auslaßöffnung (11) am weitesten entfernten Endes des zentralen Kanals geschlossen sind.

10. Vorrichtung nach einem der Ansprüche 1 bis 9, dadurch gekennzeichnet, daß der Aufbau (20) an der Auslaßöffnung (16) von der Wandzone des Behälters (10) durch einen zwischenraum (19) dort getrennt ist, wo sich die Speiseöffnung (15) anfügt.

11. Vorrichtung nach Anspruch 10, dadurch gekennzeichnet, daß der Aufbau (20) von einer Platte (23) getragen wird, die der genannten Wandzone zugewandt ist und öffnungen (29) aufweist für das Nachspeisen des Pufferbehälters (20) mit Flüssigkeit.

12. Vorrichtung nach einem der Ansprüche 1 bis 11, dadurch gekennzeichnet, daß die Speisevorrichtung durch eine Anordnung von Streifen (15) gebildet ist, die im wesentlichen parallel zur Wand des Behälters (10) angeordnet sind und sich an den Pufferbehälter (20) anfügen.

13. Vorrichtung. nach Anspruch 12, dadurch gekennzeichnet, daß der Abstand zwischen den Streifen (15) und der Innenwand des Behälters (10) größer als der Mindestabstand zwischen den benachbarten Elementen des Aufbaus (20) ist.

14. Vorrichtung nach einem der Ansprüche 12 und 13, dadurch gekennzeichnet, daß der Abstand zwischen den Streifen (15) und der innenwand des Behälters (10) in Richtung zum Pufferbehälter (20) abnimmt.

15. Vorrichtung nach einem der Ansprüche 12 bis 14, dadurch gekennzeichnet, daß die Breite .der Streifen (15) in Richtung zum Pufferbehälter (20) zunimmt.

## Claims

1. Surface tension storage system of liquid, comprising: an enclosure (10) designed to contain a liquid and a pressurant gas; an output device for the liquid (20) comprising a structure (21) made up of an assembly of rigid elements delimiting a central passage (16) by forming a gas barrier around same, said central passage communicating with a using device via a liquid output (11), outside of the enclosure; and a feeding device (15) reaching to an input at the output device to supply same with liquid, characterized in that said structure (21) constitutes a buffer-tank in which the liquid is trapped by surface tension effect in gaps (22) situated between the rigid elements to constitute a reserve which is usable during a phase of working of the using device and which is re-filled by capilarity after each utilization of the feeding device, said gaps (22) having a width which increases in relation to the distance to the central passage from a minimal value (e) selected so as to form a gas barrier along the inner surface delimiting the central passage (16) up to a maximum value (E) selected so as to prevent the liquid contained inside the structure from being expelled into the enclosure (10) as long as the ambient acceleration does not exceed a given threshold.

2. Device according to claim 1, characterized in that at least in a part of the structure (20) bordering the central passage, the width of said gaps (22) between the rigid elements is increasing in the strict sense in relation to the distance to the central passage so as to help the capillary effect in this structure part.

3. Device according to any one of claims 1 and 2, characterized in that the structure comprises a set of plane blades (25, 25', 25"a) arranged radially around the said central passage (16).

4. Device according to claim 3, characterized in that the structure comprises at least an additional set of elements (26, 26', 26"a, 26"b) arranged around said set of radial blades.

5. Device according to claim 4, characterized in that said additional elements (26, 26', 26"a, 26"b) create between them gaps of constant length.

6. Device according to any one of claims 4 and 5, characterized in that said additional elements are discs (26, 26"a, 26"b) surrounding the radial blades and perpendicular thereto.

7. Device according to any one of claims 1 to 6, characterized in that the structure (21) occupies a cylindrical volume whose axis is that of said central passage (16).

8. Device according to claim 7, characterized in that the structure (20) has a rectangular-shaped meridian section.

9. Device according to any one of claims 1 to 8, characterized in that the buffer-tank (20) and the central passage (16) are closed at the level of the end of the central passage which is farthest from the outlet (11).

10. Device according to any one of claims 1 to 9, characterized in that the structure (20) is separated from the part of the enclosure (10) wall containing the outlet (16) by a gap (19) where the feeding device (15) converges.

11. Device according to claim 10, characterized in that the structure (20) is supported by a plate (23) which faces the said wall part and is provided with apertures (29) for re-filling the buffer-tank (20) with liquid.

12. Device according to any one of claims 1 to 11, characterized in that the feeding device consists of a set of blades (15) arranged substantially parallel to the enclosure (10) wall and converging to the buffer tank (20).

13. Device according to claim 12, characterized in that the distance separating the blades (15) from the interior wall of the enclosure (10) is greater than the minimum distance between adjacent elements of the structure.

14. Device according to any one of claims 12 and 13, characterized in that the distance separating the blades (15) from the interior wall of enclosure (10) reduces towards said buffer-tank (20).

15. Device according to any one of claims 12 and 14, characterized in that the width of the blade (15) increases towards the buffer-tank (20).

Fig-1

Fig-2

1

Fig-3

Fig-4

Fig.5

Fig.7

Fig.6